# EUROPÄISCHE PATENTSCHRIFT

(11) **EP 2 310 117 B1**
(45) Veröffentlichungstag und Bekanntmachung des Hinweises auf die Patenterteilung: **31.07.2013**
(21) Anmeldenummer: 09776818.8
(22) Anmeldetag: 24.06.2009
(51) Int. Cl.: B01F 3/04, B01F 5/04, B01F 5/06, B01F 15/00, B01F 15/04, A23L 2/54

(54) **VERFAHREN UND VORRICHTUNG ZUM KARBONISIEREN EINES FLÜSSIGEN MEDIUMS, BEISPIELSWEISE EINES GETRÄNKS**
METHOD AND DEVICE FOR CARBONATING A LIQUID MEDIUM, FOR EXAMPLE A BEVERAGE
PROCÉDÉ ET DISPOSITIF DE GAZÉIFICATION D'UN LIQUIDE, PAR EXEMPLE D'UNE BOISSON

(30) Priorität: 10.07.2008 DE 102008032369
(43) Veröffentlichungstag der Anmeldung: 20.04.2011
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2009/004540
(87) Internationale Veröffentlichungsnummer: WO 2010/003550

(56) Entgegenhaltungen:
- EP-A1- 0 454 864
- EP-B- 1 283 069
- WO-A-2007/147191
- DE-C1- 4 124 728
- DE-U1- 9 116 615
- FR-A- 2 285 172
- GB-A- 2 234 187
- US-A- 3 186 644
- US-A- 5 971 371
- US-A1- 2004 131 514

## Beschreibung

Die Erfindung bezieht sich auf ein Verfahren gemäß dem Oberbegriff des Patentanspruchs 1 sowie auf eine Vorrichtung zum Durchführen des Verfahrens gemäß dem Oberbegriff des Patentanspruchs 8.

Verfahren und Vorrichtungen zum Karbonisieren von flüssigen Medien, insbesondere von Getränken sind bekannt. Bei den heute Üblichen Verfahren erfolgt die Karbonisierung in der Regel über Injektionsdüsen unterschiedlichster Bauart, über die CO2 in das eine Karbonisierungsstrecke durchströmendes flüssiges Medium, beispielsweise Getränk eingebracht wird. Diese bekannten Methoden sind mit zunehmendem CO2-Gehalten und bei größeren Leistungen oder Durchsetzen (Menge des karbonisierten Mediums je Zeiteinheit) problematisch. So soll beispielsweise bei der Karbonisierung von Getränken in möglichst kurzer Zeit ein ganz beachtlicher Anteil von CO2, beispielsweise 10g oder mehr pro Liter in das Getränk eingebracht werden, und zwar bei hohen Durchsätzen bzw. Volumenströmen bis zu 75 m3/h. Dies ist mit den bekannten Verfahren vielfach nicht erreichbar, insbesondere auch nicht mit ausreichend stabiler Bindung der Kohlensäure im Getränk.

Bekannt sind ein Verfahren sowie eine Vorrichtung mit den Merkmalen des Oberbegriffs des Patentanspruches 1 bzw. des Patentanspruches 8 (FR 22 85 172 A1). Bei diesem bekannten Verfahren bzw. bei dieser bekannten Vorrichtung sind die Düsen- oder Austrittsöffnungen zum Ausbringen des CO2-Gases in das flüssige Medium an einem beidendig offenen Rohr vorgesehen, welches zur Ausbildung einer Wendel um einen massiven Stab wendelförmig angeordnet ist. Das CO2-Gas durchströmt dieses Rohr. Nachtelllg Ist dabei u,a, dass eine gleichmäßige Verteilung des aus den Dosenöffnungen austretenden CO2-Gases nicht gewährleistet ist.

Bekannt ist weiterhin eine Vorrichtung zur Karbonisierung von Flüssigkeiten (GB 2 234 187 A) , bei der zur Verlängerung der Karbonisierungsstrecke innerhalb der Vorrichtung eine wendelförmige Schikane angeordnet ist, welche die Flüssigkeit dazu zwingt, auf ihrem Weg durch die Vorrichtung eine wendelförmige Bewegung auszuführen, wodurch die Karbonisierungsstrecke verlängert wird. Durch diese Maßnahme gelingt es, bei unveränderten äußeren Abmessungen eine gestelgerte Karbonlsierungsleistung zu erzlelen. Für die Karbonisierung von Flüssigkeiten mit großen Leistungen [m³/h], wie diese beispielsweise innerhalb der Getränkeindustrie gefordert werden, ist eine solche Vorrichtung nur unzureichend geeignet, da eine bloße Vergrößerung der relevanten Abmessungen einer solchen Vorrichtung zu unerwünscht großen Abmessungen führen würde,

Ebenfalls bekannt wurde eine Vorrichtung nach der WO 2007/147191 A1. Diese Schrift zeigt eine Vorrichtung, bei welcher innerhalb einer äußeren Rohrleitung, durch welche ein Getränk strömt, eine weitere, innere Rohrleitung angeordnet ist, welche ein Gas, vorzugsweise Sauerstoff führt. An der Mantelfläche der inneren Rohrleitung sind zahlreiche Durchströmöffnungen vorgesehen, durch welche das Gas in das Getränk gelangen soll. Zur Ausbildung einer, den Gasübergang fördernden Drallströmung schlägt diese Schrift vor, an der Innenwandung der äußeren

Rohrleitung eine Flüssigkeitsumlenkeinrlchtung anzuordnen. Nachteilig an der vorgeschlagenen Vorrichtung ist, dass die Drallströmung nur unvollkommen ausgebildet wird, und somit der Übergang des Gases in die Flüssigkeit nur unvollkommen gelingt.

Ebenfalls bekannt wurde eine Vorrichtung nach der DE 41 24 728 C1. Diese Schrift stellt eine einfache Karbonisierungsvorrichtung vor, bei welcher die Flüssigkeit durch einen rohrförmigen Strömungsweg strömt, wobei das Druckgas durch in der Wandung des Strömungsweges angeordnete Bohrungen in die Flüssigkeit gelangt. Nachteilig an der vorgeschlagenen Ausführung ist, dass auf jegliche Maßnahmen zur Intensivierung des Gasüberganges verzichtet wird, was eine erhebliche Baugröße der Vorrichtung nach sich zieht.

Ebenfalls bekannt wurde eine Vorrichtung gemäß der US 3,186,644. Diese Schrift stellt einen Diffusorkopf vor, mittels welchem unter Druck stehendes Gas in eine Flüssigkeit eingebracht werden soll, wobei das Gas durch Düsen in der Wandung des Diffusorkopfes austreten soll. Das Anwendungsgebiet des vorgeschlagenen Diffusorkopfes liegt beispielsweise in der Abscheidung industrieller Abfälle aus Gemischen durch Flotation, wobei durch eine besonders vorteilhafte Gestaltung des Diffusorkopfes eine Verschmutzung des Diffusorkopfes durch Schmutzpartikel vermieden werden soll, Diese Schrift liefert keinen Beitrag zur Karbonisierung von Getränken.

Aufgabe der Erfindung ist es, ein Verfahren aufzuzeigen, welches die vorgenannten Nachteile vermeidet und eine Karbonisierung von flüssigem Medium, insbesondere von Getränken, auch mit einem hohen CO2-Gehalt und bei ausreichend stabiler Bindung der Kohlensäure im flüssigen Medium bei hoher Leistung und bei kleinen äußeren Abmessungen der Vorrichtung ermöglicht. Zur Lösung dieser Aufgabe ist ein Verfahren entsprechend dem Patentanspruch 1 ausgebildet. Eine Vorrichtung zum Durchführen des Verfahrens ist Gegenstand des Patentanspruches 8.

Bei dem erfindungsgemäßen Verfahren erfolgt das Einbringen von CO2 in das flüssige Medium über einer Vielzahl von Düsen- oder Abgabeöffnungen, die entlang wenigstens einer längeren Karbonisierungsstrecke oder wenigstens eines längeren, vom zu karbonisierenden Medium durchströmten Behandlungsraums oder -kanals vorgesehen sind, der von einem Rohrstück gebildet ist. Die CO2-Konzentration im flüssigen Medium nimmt bei dieser Behandlung proportional mit der Länge der Karbonisierungsstrecke oder des wenigstens einen Behandlungskanals zu. Durch die Verwendung einer Vielzahlvon Düsen-oder Austrittsöffnungen für das CO2 und durch die Verteilung dieser Öffnungen entlang des Behandlungskanals entstehen ausreichende Kontaktflächen zwischen dem CO und dem flüssigen Medium. Gleiches wird erreicht bei Verwendung wenigstens einer sich in Richtung des Behandlungskanals erstreckenden schlitzförmigen Düsen- oder Austrittsöffnung größerer Länge.

Bei der Erfindung sind Mittel vorgesehen, um durch Verwirbelung bzw. durch Strömungsturbulenzen im flüssigen Medium die CO2-oder Kohlensäurebindung im Medium zu verbessern. Diese Mittel sind beispielsweise von einer am Ausgang der wenigstens einen Karbonisierungsstrecke vorgesehenen Pumpe, beispielsweise Druckerhöhungspumpe, und/oder von einer Mischeinrichtung gebildet. Im Bereich des Behandlungskanals ist eine die Strömungsturbulenzen im flüssigen Medium erzeugende Schikane vorgesehen, wobei diese Schikane zugleich auch die Düseneinheit zur CO2-Abgabe ist.

Weiterbildungen, Vorteile und Anwendungsmöglichkeiten der Erfindung ergeben sich auch aus der nachfolgenden Beschreibung von Ausführungsbelsplelen und aus den Figuren.

Die Erfindung wird im Folgenden anhand der Figuren an Ausführungsbeispielen näher erläutert. Es zeigen:
- Flg. 1: In schematischer Funktionsdarstellung eine Karbanisierungsvorrichtung gemäß der Erfindung;
- Fig. 2: einen Längsschnitt durch die Karbonisierungsstrecke der Karbanisierungsvorriohtung der Figur 1;
- Zig. 3: einen Querschnitt durch die Karbonisierungsstrecke der Karbonisierungsvorrichtung der Figur 1;
- Fig. 4: eine graphische Darstellung der Zunahme des CO2-Gehalts in der Flüssigkeit entlang der Karbonisierungsstrecke;
- Fig. 5 und 6: Querschnitte einer Karbonisierungsstrecke bei Ausführungsformen, die nicht Teil der Erfindung sind;
- Fig. 7: in vereinfachter schematischer Darstellung einen Längsschnitt durch die Karbonisierungsstrecke der erfindungsgemäßen Vorrichtung.

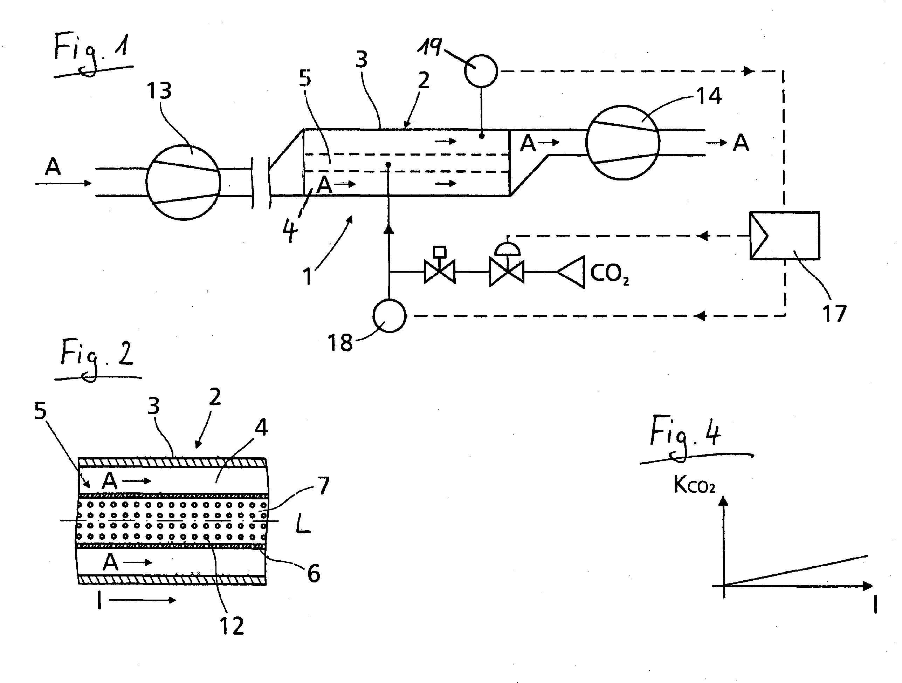

Die in der Figur 1 allgemein mit 1 bezeichnete Karbonisierungsvorrichtung dient zum Karbonisieren eines flüsslgen Mediums, d.h. zum Einbringen von CO2 bzw. Kohlensäure in das flüssige Medium, z.B. in ein Getränk.

Die Vorrichtung 1 besteht aus einer Karbonisierungsstrecke 2, die ihrerseits von einem bei der dargestellten Ausführungsform rohrförmigen Gehäuse 3 mit einem von dem flüssigen Medium durchströmbaren Behandlungskanal 4 gebildet ist, der sich über die gesamte Länge des Gehäuses 3 erstreckt.

Innerhalb des Gehäuses 3 ist entlang des Behandlungskanals 4 eine Düseneinheit 5 vorgesehen, die bei der dargestellten Ausführungsform aus einem beidendig geschlossenen, achsgleich mit der Längsachse L des rohrförmigen Gehäuses 3 angeordneten Düsengehäuse 6 mit kreiszylindrischer Umfangswandung besteht. Der Innenraum 7 des Düsengehäuses 6 ist über eine Leitung 8, in der ein Absperrventil 9 sowie ein Regelventil 10 vorgesehen sind, mit einer Quelle 11 für ein, unter Druck stehendes CO2-Gas oder mit einer dieses CO2-Gas führenden Leitung verbunden.

Der Außendurchmesser des Düsengehäuses 6 ist kleiner als der Innendurchmesser des Gehäuses 3, so dass der Behandlungskanal 4 ein ringförmiger zwischen dem Düsengehäuse 6 und der Innenfläche des Gehäuses 3 gebildeter Kanal ist, dessen axiale Länge wesentlich größer ist als der Querschnitt des Gehäuses 3.

An der Umfangsfläche ist das Düsengehäuse 6 auf seiner gesamten Länge und an seinem gesamten Umfang mit einer Vieizahl von Öffnungen 12 versehen, und zwar für den Austritt von CO2 in den Behandlungskanal 4.

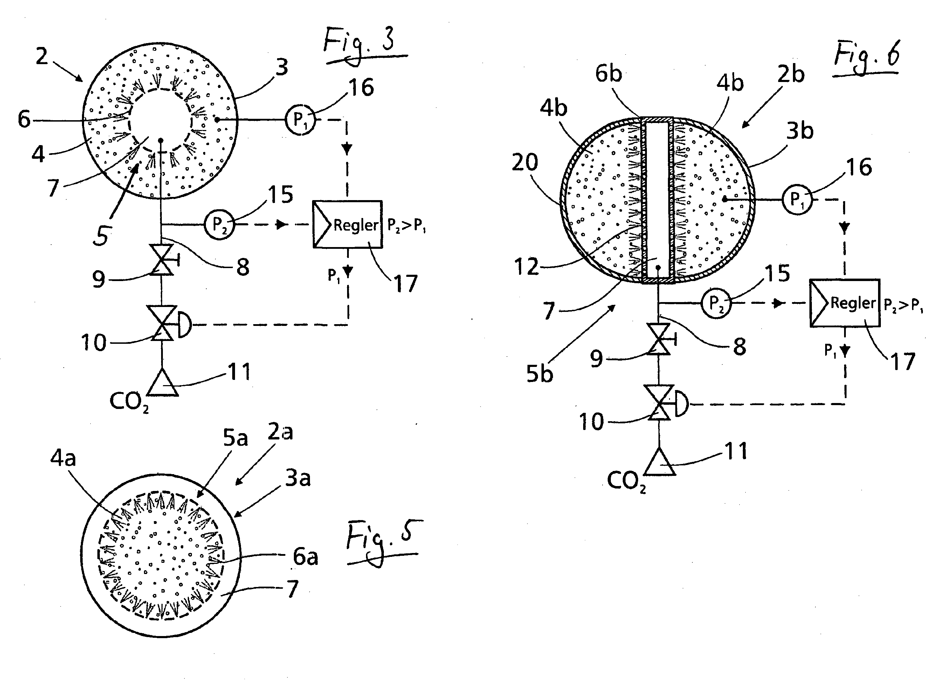

Mit 13 und 14 sind in der Figur 1 zwei Pumpen bezeichnet, über die das zu karbonislerende flüssige Medium (z.B. Getränk) der Karbonisierungsstrecke 2 bzw deren Einlass 2.1 zugeführt wird (Pumpe 13) bzw. über die das karbonisierte, d.h. mit CO2 versetzte Medium von der Karbonisierungsstrecke 2 bzw.. von deren Auslass 2.2 einer weiteren Verwendung zugeführt wird (Pumpe 14), beispielsweise einer nicht dargestellten Füllmaschine. Um ein Eindringen von flüssigem Medium in den Innenraum 7 des Düsengehäuses 6 zu vermeiden und insbesondere auch die Abgabe von CO2 über die DUsenöffnungen 12 In das den Behandlungskanal 4 durchströmende flüssige Medium zu ermöglichen, ist der Druck P1 des CO2-Gases im Innenraum 7 so eingestellt, dass er größer ist als der Druck P2 des flüssigen Mediums im Behandlungskanal 4. Um diese Druckverhältnisse einzuhalten ist entsprechend der Figur 3 in der Leitung 8 ein den Druck P1 messender Sensor 15 vorgesehen. Weiterhin ist im Sehandlungskanal 4 ein den Druck P2 des flüssigen Mediums messender Sensor 16 vorgesehen. Die Messsignale beider Sensoren 15 und 16 werden in einem Regler 17 verglichen, der das Regelventil 10 derart steuert, dass der Druck P1 stets größer ist als der Druck P2.

Weiterhin besteht die Möglichkeit, den Volumenstrom des dem Düsengehäuse 6 zugeführten CO2-Gases in Abhängigkeit vom Volumenstrom des den Behandlungskanal 4 durchströmenden flüssigen Mediums zu steuern, um so eine gewünschte CO2-Konzentration im karbonisierten flüssigen Medium zu erreichen. Hierzu ist entsprechend der Figur 1 In der Leitung 8 ein den Volumenstrom des CO2-Gases messender Sensor 1 B und in dem Behandlungskanal 4 ein den Volumenstrom des flüssigen Mediums messender Sensor 19 vorgesehen. Beide Sensoren 18 und 19 sind wiederum mit dem Regler 17 verbunden, der das Regelventil 10 zusätzlich auch unter Berücksichtigung der Sensorsignale der Sensoren 18 und 19 steuert, und zwar bevorzugt auch in Abhängigkeit von weiteren Steuerparametern oder Einstellungen, beispielsweise in Abhängigkeit von der gewünschten Karbonisierungsrate bzw. dem gewünschten CO2-Gehalt sowie eventuell in Abhängigkeit von weiteren Parametern, wie z.B. Temperatur des flüssigen Mediums.

Der Regler 17 ist beispielsweise eine Mikroprozessor gestützte Steuerelektronik oder aber Bestandteil einer Steuereinrichtung oder eines Rechners zur Steuerung einer die Vorrichtung 1 einschließende Anlage. Selbstverständlich kann der Regler 17 auch ganz oder teilweise softwaremäßig in einer Steuerelektronik oder in einem Rechner realisiert sein.

Der Vorteil der Vorrichtung 1 bzw. der Karbonisierungsstrecke 2 besteht darin, dass das Einbringen des CO2-Gases in das flüssige Medium auf einer relativ langen Behandlungsstrecke 4 erfolgt und dass somit insbesondere auch bei hohen Leistungen der Vorrichtung 1, d.h. bei einem hohen Durchsatz des flüssigen Mediums durch die Vorrichtung 1 Je Zeltelnhelt, eine gleichmäßige Zugabe von CO2 in das flüssige Medium mit einer stabilen CO2-Bindung in dem flüssigen Medium erreicht wird. Damit ist auch ein unerwünschtes Austreten von CO2 aus dem flüssigen Medium bei der weiteren Behandlung, insbesondere beim Füllen verhindert oder wesentlich reduziert, so dass z,B. beim Abfüllen des karbonisierten Mediums höhere Leistungen möglich sind.

Die Zugabe des CO2-Gases erfolgt mit einem Druck P1, der deutlich oberhalb des jeweiligen Sättigungsdruckes liegt. Durch die nachgeschaltete Pumpe 14, die als Druckerhöhungspumpe dient, wird aufgrund der in dieser Pumpe auftretenden Strömungsturbulenzen die CO2-Bindung im flüssigen Medium noch weiter verbessert.

Wie in der Figur 4 dargestellt nimmt die CO2-Konzentration K_{CO2} im flüssigen Medium proportional mit Länge I der Karbonisierungsstrecke oder des wenigstens einen Behandlungskanals zu.

Die Figuren 5 und 6 zeigen weitere mögliche Ausführungen der Karbonisierungsstrecke 2a bzw. 2b die ober nicht Teil der Erfindung sind. Bei derAusführung der Figur 5 ist die der Karbonisierungsstrecke 2 entsprechende Karbonisierungsstrecke 2a so ausgebildet, dass sich der dem Behandlungskanal 4 entsprechende Behandlungskanal 4a innerhalb der Düseneinrichtung 5a befindet, d.h. die Düseneinrichtung 5a umschließt mit ihrem ringartigen Düsengehäuse 6a den Behandlungskanal 4a und Ist an Ihrer diesen Behandlungskanal umschließenden Wandung mit der Vielzahl der Düsenöffnungen 12 versehen.

Bei der Ausführung der Figur 6 besteht die Karbonisierungsstrecke 2b aus einer Düseneinrichtung 5b mit einem im Querschnitt rechteckförmigen Düsengehäuse 6b, welches an den Querschnittsseiten mit größerer Breite mit der Vielzahl der Öffnung 12 versehen ist. Beidseitig von dem Gehäuse 6b sind an die Querschnittsseiten größerer Breite anschlleßend Behandlungskanäle 4b geblldet, die Jewells durch bogenförmige, dicht mit dem Düsengehäuse 6b verbundene Wandabschnitte 20 begrenzt sind. Das Düsengehäuse 6b ist wiederum beidendig verschlossen und mit der Leitung 8 zum Zuführen des CO2-Gases verbunden. In der Leitung sind das Sperrventil 9 und das Regelventil 10 sowie der Drucksensor 15 vorgesehen. In wenigstens einem Behandlungskanal 4b ist der Drucksensor 16 angeordnet. Dargestellt ist in der Figur 6 weiterhin der Regler 17, mit dem in Abhängigkeit von den Sensorsignalen der Drucksensoren 15 und 16 das Regelventil 10 betätigt wird,

Es versteht sich, dass auch bei den Karbonisierungsstrecken 2a und 2b sich die jeweilige Düseneinrichtung 5a bzw. 5b über die gesamte Länge des Behandlungskanals 4a bzw. der Behandlungskanäle 4b erstreckt, wobei die Länge der Behandlungskanäle 4a und 4b deutlich größer ist als der Querschnitt dieser Kanäle.

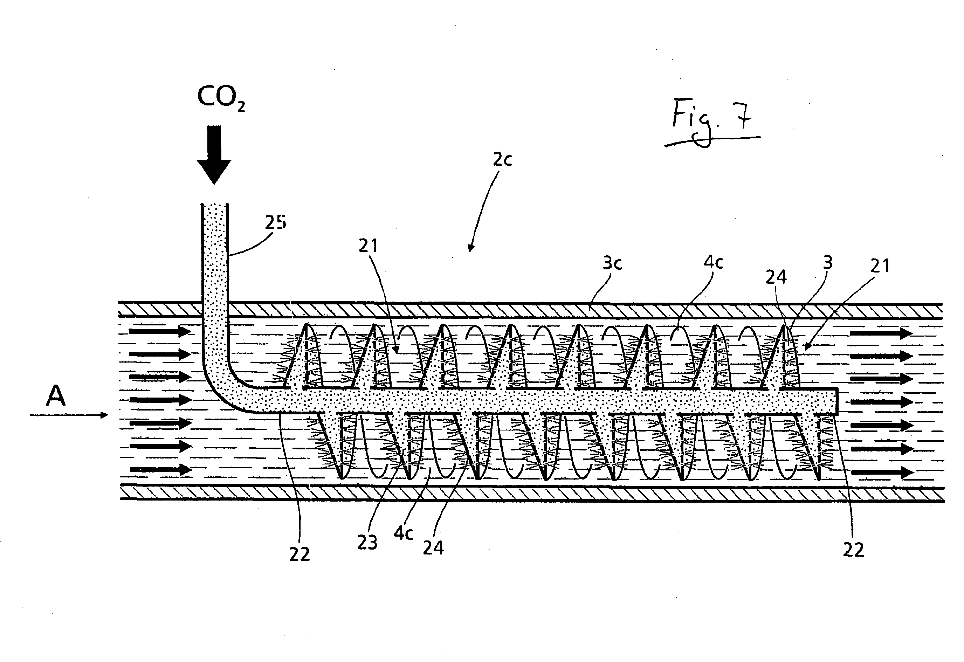

Die Figur 7 zeigt im Längsschnitt eine Karbonisierungsstrecke 2c, bei der innerhalb des rohrförmigen, den Behandlungskanal 4c begrenzenden Gehäuses 3c eine Schikane 21 für das flüssige Medium in Form eines schnecken- oder wendelartigen Hohlkörpers angeordnet ist. Die Schikane 21 besteht hierfür aus einem achsgleich mit der Längsachse L des Gehäuses 3c angeordneten Rohrstück 22 und aus einer über die Außenfläche des Rohrstückes 22 wegstehenden und als Hohlkörper ausgebildeten Wendel 23, die an ihren Oberflächen mit einer Vielzahl von Düsen-oder Austrittsöffnungen 24 versehen ist. An einem Ende ist das Rohrstück 22 dicht verschlossen. Am anderen Ende ist das Rohrstück 22 mit einem gekrümmten Abschnitt 25 aus dem rohrartige Gehäuse 3c dicht herausgeführt und beispielsweise mit der Leitung 8 zum Zuführen von CO2 unter Druck verbunden. Der Durchmesser der Schikane 21 bzw. der Wendel 23 ist in etwa gleich dem Innendruchmesser des Gehäuses 3c, so dass das die Karbonisierungsstrecke 2c bzw. das Gehäuse 3c durchströmende flüssige Medium innerhalb der wendelartigen Schikane 21 diese auf einem die Längsachse L des Rohrstückes 22 umschließenden wendelartigen Strömungsweg oder den Behandlungskanal 4c durchströmt und dabei das aus den öffnungen 24 austretende CO2 in das flüssige Medium eingebunden wird.

Besondere Vorteile der Karbonisierungsstrecke 2c bestehen u.a. darin, dass durch den wendelartigen Strömungsweg sich trotz einer kompakten Ausbildung der Karbonlsierungsstrecke 2c sich ein relativ langer Behandlungskanal 4c ergibt. Weiterhin werden durch die Schikane 21 erhebliche Strömungsturbulenzen innerhalb des flüssigen Mediums erzeugt, die die Vermischung und Einbindung von CO2 in das flüssige Medium erheblich verbessern, insbesondere auch zu einer gleichmäßigen und stabilen Einbindung von CO2 im flüssigen Medium führen, so dass ein Entbinden von CO2 speziell auch bei eine nachfolgenden Behandlung des karbonisierten Mediums, belsplelswelse belm Füllen dieses Mediums in Flaschen oder dergleichen Behälter verhindert oder zumindest erheblich reduziert ist.

### Bezugszeichenliste

- 1: Karbonisierungsvorrichtung
- 2, 2a-2c: Karbonisierungsstrecke
- 3, 3a - 3c: Gehäuse
- 4, 4a-4c: Behandlungskanal
- 5, 5a, 5b: Düseneinrichtung
- 6, 6a, 6b: Düsengehäuse
- 7: Innenraum
- 8: Leitung
- 9: Sperrventil
- 10: Regelventil
- 11: CO2-Quelle
- 12: Abgabe- oder Düsenöffnung
- 13, 14: Pumpe
- 15, 16: Drucksensor
- 17: Regler
- 18, 19: Sensor
- 20: Wandung
- 21: Schikane
- 22: Rohrstück
- 23: Wendel
- 24: Abgabe- oder Düsenöffnung
- 25: Absch n itt
- A: Strömungsrichtung des flüssigen Mediums, beispielsweise Getränks
- L: Längsachse I Länge
- K_{CO2}: CO2-Konzentration

## Patentansprüche

1. Verfahren zum Karbonisieren eines flüssigen Mediums, beispielsweise eines Getränks, durch Einbringen von CO2 unter Druck in das flüssige Medium über wenigstens eine Düseneinrichtung (5, 5a, 5b 21), die in einem von dem flüssigen Medium durchströmten Gehäuse (3, 3a - 3c) vorgesehen ist, wobei das Einbringen von CO2 in das flüssige Medium über eine Vielzahl von Düsen- oder Austrittsöffnungen (12, 24) der wenigstens einen Düseneinrichtung (5, 5a, 5b 21) erfolgt und die Düsen- oder Austrittsöffnungen (12, 24) entlang wenigstens eines von dem flüssigen Medium durchströmten Behandlungskanals (4, 4a - 4c) verteilt vorgesehen sind,
wobei das CO2 im Bereich einer in der Karbonisierungsstrecke (2c) angeordneten und von dem flüssigen Medium durchströmten Schikane (21) mit Wendel (23) eingebracht wird, und
wobei die als Hohlkörper ausgebildete Wendel (23) an ihren Oberflächen mit den Düsen- oder Austrittsöffnungen (24) versehen ist **dadurch gekennzeichnet,**
**dass** die Schikane (21) aus einem achsgleich mit der Längsachse L des Gehäuses (3c) angeordneten Rohrstück (22) und aus der über die Außenfläche des Rohrstückes (22) wegstehenden Wendel besteht, und
**dass** das CO2 für den Austritt an den Düsen- oder Austrittsöffnungen (24) unter Druck in das Rohrstück (22) eingebracht wird.

2. Verfahren nach Anspruch 1, **dadurch gekennzeichnet, dass** das flüssige Medium über eine erste Pumpe (13) einem Einlass (2.1)des von diesem Medium durchströmten Gehäuse (3, 3a - 3c) und über eine zweite als Druckerhöhungspumpe wirkende Pumpe (14) karbonisiert von einem Auslass (2.2) des Gehäuse (3, 3a - 3c) einer weiteren Verwendung zugeführt wird.

3. Verfahren nach Anspruch 1 oder 2, **dadurch gekennzeichnet, dass** die Düsen- oder Abgabeöffnungen (12, 24) auf einer Länge der Karbonisierungsstrecke (2, 2a - 2c) oder des Behandlungskanals (4, 4a, 4b, 21) verteilt vorgesehen sind, wobei deren Länge größer ist, vorzugsweise um ein Vielfaches größer ist als der maximale Strömungsquerschnitt, den der Behandlungskanal (4, 4a - 4c) im Bereich der Düsen- oder Abgabeöffnungen (12, 24) aufweist.

4. Verfahren nach einem der vorhergehenden Ansprüche, **dadurch gekennzeichnet, dass** das Einbringen von CO2 über wenigstens eine Schlitzdüse erfolgt, die sich über eine Länge der Karbonisierungsstrecke (2, 2a - 2c) oder des Behandlungskanals (4, 4a, 4b, 21) erstreckt, wobei deren Länge größer ist, vorzugsweise um ein Vielfaches größer Ist als der maximale Strömungsquerschnitt, den der Behandlungskanal (4, 4a - 4c) im Bereich der Düsen-oder Abgabeöffnungen (12, 24) aufweist.

5. Verfahren nach einem der vorhergehenden Ansprüche, **dadurch gekennzeichnet, dass** das CO2 in das flüssige Medium radial oder im Wesentlichen radial zur Strömungsrichtung oder zur Längserstreckung des Behandlungskanals (4, 4a, 4b) eingebracht wird.

6. Verfahren nach einem der vorhergehenden Ansprüche, **dadurch gekennzeichnet, dass** der CO2-Druck in der Düseneinrichtung (5, 5a, 5b 21) in Abhängigkeit vom Druck des flüssigen Mediums gesteuert wird, und zwar so, dass der CO2-Druck wenigstens gleich dem Druck des flüssigen Mediums ist.

7. Verfahren nach einem der vorhergehenden Ansprüche, **dadurch gekennzeichnet, dass** der Volumenstrom des der Düseneinrichtung (5, 5a, 5b 21) zugeführten CO2 In Abhängigkeit vom Volumenstrom des die Karbonisierungsstrecke (2, 2a-2c) oder den wenigstens einen Behandlungskanal (4, 4a - 4c) durchströmenden flüssigen Mediums gesteuert wird.

8. Vorrichtung zum Karbonisieren eines flüssigen Mediums, beispielsweise eines Getränks, mit wenigstens einer In einem von dem flüssigen Medium durchströmten Gehäuse (3, 3a - 3c) vorgesehen Düseneinrichtung (5, 5a, 5b 21) zum Einbringen von CO2 unter Druck in das flüssige Medium,
wobei die Düseneinrichtung (5, 5a, 5b 21) eine Vielzahl von Düsen- oder Austrittsöffnungen (12, 24) zum Einbringen von CO2 in das flüssige Medium aufweist,
wobei die Düsen- oder Austrittsöffnungen (12, 24) entlang wenigstens eines von dem flüssigen Medium durchströmten Behandlungskanals (4, 4a - 4c) verteilt vorgesehen sind, und
wobei die Düsen- oder Abgabeöffnungen (12, 24) an Oberflächen einer als Hohlkörper ausgebildeten Wendel (23 wenigstens einer in der Karbonisierungsstrecke (2c) angeordneten und von dem flüssigen Medium durchströmten Schikane (21) vorgesehen sind,
**dadurch gekennzeichnet,**
**dass** die Schikane (21) aus einem achsgleich mit der Längsachse L das Gehäuses (3c) angeordneten Rohrstück (22) und aus der über die Außenfläche des Rohrstückes (22) wegstehenden Wendel (23) besteht, und dass das Rohrstück (22) einen Anschluss (25) aufweist, über den das an den Düsen-oder Austrittsöffnungen (24) austretende CO2 unter Druck zugeführt wird.

9. Vorrichtung nach Anspruch 8, **gekennzeichnet durch** eine erste Pumpe (13) zum Zuführen des flüssigen Mediums an einen Einlass (2.1) des von diesem Medium durchströmten Gehäuses (3, 3a - 3c) und **durch** eine zweite als Druckerhöhungspumpe wirkende Pumpe (14), über die das karbonisierte flüssige Mediums von einem Auslass (2.2) des Gehäuse (3, 3a - 3c) einer weiteren Verwendung zugeführt wird.

10. Vorrichtung nach Anspruch 8 oder 9, **dadurch gekennzeichnet, dass** das Rohrstück (22) an einem Ende den Anschluss (25) aufweist und am anderen Ende verschlossen ist.

11. Vorrichtung nach einem der vorhergehenden Ansprüche, **dadurch gekennzeichnet, dass** die Düsen- oder Abgabeöffnungen (12, 24) auf einer Länge der Karbonisierungsstrecke (2, 2a - 2c) oder des Behandlungskanals (4, 4a, 4b, 21) verteilt vorgesehen sind, wobei deren Länge größer ist, vorzugsweise um ein Vielfaches größer ist als der maximale Strömungsquerschnitt, den der Behandlungskanal (4, 4a - 4c) im Bereich der Düseneinrichtung (5, 5a, 5b 21) aufweist.

12. Vorrichtung nach einem der vorhergehenden Ansprüche, **dadurch gekennzeichnet, dass** sich die wenigstens eine Schlitzdüse über eine Länge der Karbonisierungsstrecke (2, 2a -2c) oder des Behandlungskanals (4, 4a, 4b, 21) erstreckt, wobei deren Läge größer Ist, vorzugsweise um ein Vielfaches größer ist als der maximale Strömungsquerschnitt, den der Behandlungskanal (4, 4a - 4c) im Bereich der Düseneinrichtung (5, 5a, 5b 21) aufweist.

13. Vorrichtung nach einem der vorhergehenden Ansprüche, **dadurch gekennzeichnet, dass** die Düsen- oder Abgabeöffnungen (12, 24) für ein Einbringen von CO2 in das flüssige Medium radial oder im Wesentlichen radial zur Strö. mungsrlchtung (A) oder zur Längserstreckung des Behandlungskanals (4, 4a, 4b) orientiert sind.

## Claims

1. Method for carbonating a liquid medium, for example a beverage, by introducing CO₂ under pressure into the liquid medium via at least one nozzle device (5, 5a, 5b 21) which is arranged in a housing (3, 3a - 3c) through which the liquid medium flows,
wherein CO₂ is introduced into the liquid medium via a plurality of nozzle or exit openings (12, 24) of the at least one nozzle device (5, 5a, 5b 21) and the nozzle or exit openings (12, 24) are arranged distributed along at least one treatment channel (4, 4a - 4c) through which the liquid medium flows,
wherein the CO₂ is introduced in the area of a chicane (21) with coil (23) which is arranged in the carbonation section (2c) and through which the liquid medium flows, and
wherein the coil (23) designed as a hollow body is provided, on its surfaces, with the nozzle or exit openings (24),
**characterised in**
**that** the chicane (21) consists of a pipe section (22) arranged square with the longitudinal axis L of the housing (3c) and of the coil protruding over the outer surface of the pipe section (22), and
**that** the CO₂ for exiting at the nozzle or exit openings (24) is introduced under pressure into the pipe section (22).

2. Method according to claim 1, **characterised in that** the liquid medium is supplied via a first pump (13) to an inlet (2.1) of the housing (3, 3a - 3c) through which this medium flows and, carbonated via a second pump (14) acting as a pressure-raising pump, from an outlet (2.2) of the housing (3, 3a - 3c) for further processing.

3. Method according to claim 1 or 2, **characterised in that** the nozzle or discharge openings (12, 24) are arranged distributed on a length of the carbonating section (2, 2a - 2c) or of the treatment channel (4, 4a, 4b, 21), wherein its length is greater, preferably many times greater than the maximum flow cross-section of the treatment channel (4, 4a - 4c) in the area of the nozzle or discharge openings (12, 24).

4. Method according to any one of the preceding claims, **characterised in that** CO₂ is introduced via at least one slotted nozzle which extends over a length of the carbonating section (2, 2a -2c) or of the treatment channel (4, 4a, 4b, 21), wherein its length is greater, preferably many times greater than the maximum flow cross-section of the treatment channel (4, 4a - 4c) in the area of the nozzle or discharge openings (12, 24).

5. Method according to any one of the preceding claims, **characterised in that** the CO₂ is introduced into the liquid medium radial or essentially radial to the flow direction or to the longitudinal extension of the treatment channel (4, 4a, 4b).

6. Method according to any one of the preceding claims, **characterised in that** the CO₂ pressure in the nozzle device (5, 5a, 5b 21) is controlled depending on the pressure of the liquid medium, such that the CO₂ pressure is at least equal to the pressure of the liquid medium.

7. Method according to any one of the preceding claims, **characterised in that** the volume flow of the CO₂ supplied to the nozzle device (5, 5a, 5b 21) is controlled depending on the volume flow of the liquid medium which flows through the carbonating section (2, 2a - 2c) or the at least one treatment channel (4, 4a - 4c).

8. Device for carbonating a liquid medium, for example a beverage, with at least one nozzle device (5, 5a, 5b 21) arranged in a housing (3, 3a - 3c) through which the liquid medium flows, for introducing CO₂ under pressure in the liquid medium,
wherein the nozzle device (5, 5a, 5b 21) has a plurality of nozzle or exit openings (12, 24) for introducing CO₂ into the liquid medium,
wherein the nozzle or exit openings (12, 24) are arranged distributed along at least one treatment channel (4, 4a - 4c) through which the liquid medium flows, and
wherein the nozzle or discharge openings (12, 24) are arranged on surfaces of a coil (23), designed as a hollow body, of at least one chicane (21) which is arranged in the carbonating section (2c) and through which the liquid medium flows,
**characterised in**
**that** the chicane (21) consists of a pipe section (22) arranged square with the longitudinal axis L of the housing (3c) and of the coil (23) protruding over the outer surface of the pipe section (22), and that the pipe section (22) has a connection (25) via which the CO₂ exiting the nozzle or exit openings (24) is supplied under pressure.

9. Device according to claim 8, **characterised by** a first pump (13) for supplying the liquid medium to an inlet (2.1) of the housing (3, 3a - 3c) through which the medium flows and by a second pump (14) acting as a pressure-raising pump via which the carbonated liquid medium is supplied from an outlet (2.2) of the housing (3, 3a - 3c) for further processing.

10. Device according to claim 8 or 9, **characterised in that** the pipe section (22) has the connection (25) at one end and is closed at the other end.

11. Device according to any one of the preceding claims, **characterised in that** the nozzle or discharge openings (12, 24) are arranged distributed on a length of the carbonating section (2, 2a - 2c) or of the treatment channel (4, 4a, 4b, 21), wherein its length is greater, preferably many times greater than the maximum flow cross-section of the treatment channel (4, 4a - 4c) in the area of the nozzle device (5, 5a, 5b 21).

12. Device according to any one of the preceding claims, **characterised in that** the at least one slotted nozzle extends over a length of the carbonating section (2, 2a - 2c) or of the treatment channel (4, 4a, 4b, 21), wherein its length is greater, preferably many times greater than the maximum flow cross-section of the treatment channel (4, 4a - 4c) in the area of the nozzle device (5, 5a, 5b 21).

13. Device according to any one of the preceding claims, **characterised in that** the nozzle or discharge openings (12, 24) for introducing CO₂ into the liquid medium are oriented radial or essentially radial to the flow direction (A) or to the longitudinal extension of the treatment channel (4, 4a, 4b).

## Revendications

1. Procédé de gazéification d'un liquide, par exemple d'une boisson en introduisant du CO2 sous pression dans le liquide par le biais d'au moins un dispositif de buse (5, 5a, 5b 21) qui est prévu dans un boîtier (3, 3a-3c) traversé par le liquide, le CO2 étant introduit dans le liquide par une pluralité d'ouvertures de buse ou de sortie (12, 24) de l'au moins un dispositif de buse (5, 5a, 5b 21) et les ouvertures de buse ou de sortie (12, 24,) étant prévues de manière répartie le long d'au moins un canal de traitement (4, 4a-4c) traversé par le liquide,
le CO2 étant introduit dans la zone d'une chicane (21) qui est disposée dans le parcours de gazéification (2c) et traversée par le liquide et qui comporte une hélice (23) et
l'hélice (23) réalisée sous la forme d'un corps creux étant pourvue, sur ses surfaces, d'ouvertures de buse ou de sortie (24),
**caractérisé en ce que** la chicane (21) se compose d'une pièce de raccordement (22) disposée sur le même axe que l'axe longitudinal L du boîtier (3c), et de l'hélice dépassant de la surface extérieure de la pièce de raccordement (22), et
le CO2 est introduit pour la sortie au niveau des ouvertures de buse ou de sortie (24) sous pression dans la pièce de raccordement (22).

2. Procédé selon la revendication 1, **caractérisé en ce que** le liquide est amené par une première pompe (13) à une entrée (2.1) du boîtier (3, 3a-3c) traversé par ce liquide et est amené en étant gazéifié à une autre utilisation par une seconde pompe (14) agissant comme une pompe de surpression depuis une sortie (2.2) du boîtier (3, 3a-3c).

3. Procédé selon la revendication 1 ou 2, **caractérisé en ce que** les ouvertures de buse ou de sortie (12, 24) sont prévues de manière répartie sur une longueur du parcours de gazéification (2, 2a-2c) ou du canal de traitement (4, 4a, 4b, 21), sa longueur étant supérieure, de préférence d'un multiple à la section d'écoulement maximale que présente le canal de traitement (4, 4a-4c) dans la zone des ouvertures de buse ou de sortie (12, 24).

4. Procédé selon l'une quelconque des revendications précédentes, **caractérisé en ce que** le CO2 est introduit par au moins une buse à fente qui s'étend sur une longueur du parcours de gazéification (2, 2a-2c) ou du canal de traitement (4, 4a, 4b, 21), sa longueur étant supérieure, de préférence d'un multiple à la section d'écoulement maximale que présente le canal de traitement (4, 4a-4c) dans la zone des ouvertures de buse ou de sortie (12, 24).

5. Procédé selon l'une quelconque des revendications précédentes, **caractérisé en ce que** le CO2 est introduit dans le liquide radialement ou sensiblement radialement au sens d'écoulement ou à l'étendue longitudinale du canal de traitement (4, 4a-4b).

6. Procédé selon l'une quelconque des revendications précédentes, **caractérisé en ce que** la pression du CO2 dans le dispositif de buse (5, 5a, 5b 21) est commandée en fonction de la pression du liquide et ce de sorte que la pression du CO2 soit au moins identique à la pression du liquide.

7. Procédé selon l'une quelconque des revendications précédentes, **caractérisé en ce que** le débit volumétrique du CO2 amené au dispositif de buse (5, 5a, 5b 21) est commandé en fonction du débit volumétrique du liquide traversant le parcours de gazéification (2, 2a-2c) ou l'au moins un canal de traitement (4, 4a-4c).

8. Dispositif de gazéification d'un liquide par exemple d'une boisson, avec au moins un dispositif de buse (5, 5a, 5b 21) prévu dans un boîtier (3, 3a-3c) traversé par le liquide pour l'introduction de CO2 sous pression dans le liquide, le dispositif de buse (5, 5a, 5b 21) présentant une pluralité d'ouvertures de buse ou de sortie (12, 24) pour l'introduction de CO2 dans le liquide,
les ouvertures de buse ou de sortie (12, 24,) étant prévues de manière répartie le long d'au moins un canal de traitement (4, 4a-4c) traversé par le liquide, et
les ouvertures de buse ou de sortie (12, 24) étant prévues sur des surfaces d'une hélice (23) réalisée sous la forme d'un corps creux d'au moins une chicane (21) disposée dans le parcours de gazéification (2c) et traversée par le liquide,
**caractérisé en ce que**
la chicane (21) se compose d'une pièce de raccordement (22) disposée sur le même axe que l'axe longitudinal L du boîtier (3c), et de l'hélice (23) dépassant de la surface extérieure de la pièce de raccordement (22), et **en ce que** la pièce de raccordement (22) présente un raccordement (25), par lequel le CO2 sortant au niveau des ouvertures de buse ou de sortie (24) est amené sous pression.

9. Dispositif selon la revendication 8, **caractérisé par** une première pompe (13) pour l'amenée du liquide au niveau d'une entrée (2.1) du boîtier (3, 3a-3c) traversé par ce liquide et par une seconde pompe (14) agissant comme une pompe de surpression, par laquelle le liquide gazéifié est amené à une autre utilisation depuis une sortie (2.2) du boîtier (3, 3a-3c).

10. Dispositif selon la revendication 8 ou 9, **caractérisé en ce que** la pièce de raccordement (22) présente le raccordement (25) sur une extrémité et est fermée sur l'autre extrémité.

11. Dispositif selon l'une quelconque des revendications précédentes, **caractérisé en ce que** les ouvertures de buse ou de sortie (12, 24) sont prévues de manière répartie sur une longueur du parcours de gazéification (2, 2a-2c) ou du canal de traitement (4, 4a-4b, 21), sa longueur étant supérieure de préférence d'un multiple à la section d'écoulement maximale que présente le canal de traitement (4, 4a-4c) dans la zone du dispositif de buse (5, 5a, 5b 21).

12. Dispositif selon l'une quelconque des revendications précédentes, **caractérisé en ce que** l'au moins une buse à fente s'étend sur une longueur du parcours de gazéification (2, 2a-2c) ou du canal de traitement (4, 4a, 4b, 21), sa longueur étant supérieure de préférence d'un multiple à la section d'écoulement maximale que présente le canal de traitement (4, 4a-4c) dans la zone du dispositif de buse (5, 5a, 5b 21).

13. Dispositif selon l'une quelconque des revendications précédentes, **caractérisé en ce que** les ouvertures de buse ou de sortie (12, 24) sont orientées pour une introduction de CO₂ dans le liquide radialement ou sensiblement radialement au sens d'écoulement (A) ou à l'étendue longitudinale du canal de traitement (4, 4a, 4b).
